Europäisches Patentamt

European Patent Office

Office européen des brevets

(11) Veröffentlichungsnummer: **0 039 933**
A1

# (12) EUROPÄISCHE PATENTANMELDUNG

(21) Anmeldenummer: 81103549.2

(22) Anmeldetag: 09.05.81

(51) Int. Cl.³: **E 06 B 3/62**
E 06 B 7/22, B 60 R 13/06

(30) Priorität: 10.05.80 DE 3018067

(43) Veröffentlichungstag der Anmeldung:
18.11.81 Patentblatt 81/46

(84) Benannte Vertragsstaaten:
AT BE CH DE FR GB IT LI LU NL SE

(71) Anmelder: Hutchinson Gummiwarenfabrik GmbH
Hansastrasse 66
D-6800 Mannheim(DE)

(72) Erfinder: Hartl, Alfred, Ing.
Kallstadter-Strasse 111
D-6700 Ludwigshafen(DE)

(74) Vertreter: Ratzel, Gerhard, Dr.
Seckenheimer Strasse 36a
D-6800 Mannheim 1(DE)

(54) Scheibeneinfassung mittels einer Profilleiste aus Gummi oder Kunststoff.

(57) Die Profilleiste ist zu einem Dichtungsrahmen zusammengefügt, der zur Halterung und Abdichtung von Fensterscheiben und ähnlichem, insbesondere bei Kraftfahrzeugen benutzbar ist, die im Querschnitt eine Nut zur Aufnahme der Fensterscheibe aufweist, wobei an der Mündung der Nut Dichtungslippen angeordnet sind und auf dem Nutboden (8) ein Federelement (3) angeordnet ist. Dieses kann als kompakter Wulst ausgebildet sein. In der Profilleiste unterhalb des Federelements kann sich mindestens ein Hohlraum (4) befinden. Der Hohlraum (4) unterhalb des Federelements (3) kann längs des Nutbodens (8) im Innern der Profilleiste verlaufen und gegebenenfalls mit Luft oder mit Materialien unterschiedlicher Elastizität ausgefüllt sein. Der Hohlraum (4) kann auch mit einem Polymer oder einem Elastomer ausgefüllt sein. Das Federelement (3) kann aus einem selbständigen Polymer oder Elastomer unterschiedlicher Elastizität bestehen und gegebenenfalls mit dem Füllmaterial des Hohlraums (4) einstückig verbunden sein. Es können auch zusätzliche Dichtleisten (5,6,7) auf der Profilleiste angeordnet sein.

# Fig. 1

EP 0 039 933 A1

- 1 -

Die Erfindung betrifft eine Scheibeneinfassung mittels einer Profilleiste aus Gummi oder Kunststoff, die zu einem Dichtungrahmen zusammengefügt ist, welcher zur Halterung und Abdichtung von Fensterscheiben und ähnlichem, insbesondere bei Kraftfahrzeugen oder dergleichen benutzbar ist, die im Querschnitt eine Nut zur Aufnahme der Fensterscheibe aufweist, wobei an der Mündung der Nut Dichtungslippen angeordnet sind.

Aus der DE-OS 1 434 273 ist eine Scheibeneinfassung der eingangs genannten Gattung bekannt, wobei zwei Wände der Nut durch ein mit der Profilleiste einstückig ausgebildetes Federband miteinander verbunden sind und das Federband von einer Ecke des Nutbodens ausgeht, vor dem Einsetzen der Fensterscheibe in die Nut etwa diagonal durch die Nut verläuft und im Abstand von der Dichtungslippe ansetzt. Dieses Federband, das eine Dichtlippe an Dichtleisten ziehen sollte, erwies sich als ungeeignetes Mittel, in Dauerbetrieb ein einwandfreies Anlegen der für die Scheibeneinfassung verwendeten Profilleiste zu gewährleisten. Es entstehen immer wieder Leckstellen, so daß auf das Einbringen von Dichtmassen nicht verzichtet werden kann.

Die Aufgabe der vorliegenden Erfindung besteht darin, eine Scheibeneinfassung vorzuschlagen, bei der auf das Einbringen von zusätzlicher Dichtmasse bei der Verwendung von Scheibeneinfassungen verzichtet werden kann.

Bei der Abdichtung von Vorder- und Rückscheiben an Kraftfahrzeugen ist es besonders vorteilhaft, ohne Dichtmassen zu arbeiten. Diese erfordern nämlich hohe Kosten für Material und Arbeit.

Diese Aufgabe wird erfindungsgemäß dadurch gelöst, daß bei einer Scheibeneinfassung der eingangs genannten Art auf dem Nutboden ein Federelement angeordnet ist. Bevorzugterweise ist das Federelement an den Nutboden einstückig angeformt.

Anstatt der bekannten Bänder werden erfindungsgemäß kompakte Federungen verwendet, und die Federelemente sind in der Profilleiste so angeordnet, daß die Bewegungen der abzudichtenden Fensterscheibe nicht zu ungleichmäßigen Spannungen und damit zum Verziehen der Dichtlippen führen.

Gemäß einer bevorzugten Ausführungsform ist das Federelement als kompakter, insbesondere einstückiger Wulst ausgebildet, der sich von dem Nutboden abhebt. Vorzugsweise befindet sich in der Profilleiste unterhalb des Federelements mindestens ein Hohlraum. Bei dieser Ausführungsform drückt das Federelement gegen den Querschnitt

-3-

der Scheibenumrandung. Gleichzeitig läßt sich durch die Anordnung von Hohlräumen unterhalb der Federelemente die Feder- und Dichtwirkung über die Anpassung der Federkonstante auf verschiedene Arten beeinflussen. Dies geschieht z.B.durch die Dimensionierung der Stegform und die richtige Wahl der Elastizität der Federelemente.

Vorzugsweise verläuft der Hohlraum unterhalb des Federelements längs des Nutbodens im Innern der Profilleiste. Dieser Hohlraum kann mit Luft oder mit Materialien unterschiedlicher Elastizität ausgefüllt sein. Durch diese mögliche Zusatzfederung wird die Feder- und Dichtwirkung des Federelements vorteilhaft beeinflußt. Als Material zum Ausfüllen des Hohlraums wird vorzugsweise ein Polymer oder ein Elastomer verwendet.

Zur Regulierung der Federkonstante kann das Federelement auch aus einem anderen Polymer oder Elastomer unterschiedlicher Elastizität bestehen. Dabei kann es insbesondere mit dem Material des Hohlraumes einstückig verbunden sein oder auch unter Weglassung des Hohlraumes als solchen aus einem einzigen, den technischen Anforderungen entsprechend dimensionierten Stück eines Polymers oder Elastomers unterschiedlicher Elastizität bestehen.

Durch die erfindungsgemäße Anordnung des Federelements entsteht vom Außenraum zum Innenraum des Wagens eine Hintereinanderschaltung von mindestens drei Dichtelementen, nämlich der vorderen Dichtlippe, dem Federelement und der inneren Dichtlippe. Es entsteht dadurch von der Außenseite zur Innenseite des Wagens eine Art Labyrinthdichtung. Das in das Gummiprofil eingebaute Federelement wirkt auf die Querschnittsfläche des Scheibenrandes ein und führt dort außer zur Abdichtung auch zur Regulierung der Andrückkräfte auf die beiden auf den Außen- und der Innenseite des Wagens gelegenen Dichtlippen.

Die Federkonstante dieser Kombination von Dichtelementen läßt sich durch die Form, sowie durch die Ausfüllung des Hohlraumes unterhalb des Federelements sowie durch Anbringen zusätzlicher Dicht- und Federleisten aus Polymeren oder Elastomeren an anderen Stellen vorteilhaft regulieren. Hierfür kommen insbesondere der Boden der inneren Karosserienut, der Boden der äußeren Karosserienut sowie die Wände der Nut in Frage. Dabei ist die Dicht leiste in einer bevorzugten Ausführungsform der Erfindung auf einer Seite der Nut in dieser nahe der vorderen Dichtlippe angeformt.

Eine andere Vervollkommnung des Erfindungsgegenstandes besteht darin, daß auf einer Seite der Profilleiste eine Zone aus entsprechendem Material entsprechender Elastiz:

tät angeordnet ist, um die Andrückkraft der Dichtlippen sicherzustellen. Diese Zone unterschiedlicher Elastizität befindet sich insbesondere auf der Seite bei der äußeren Karosserienut.

Desweiteren können die Dichtflächen der vorderen Dichtlippe und der inneren Dichtlippe aus in ihrer Weichheit unterschiedlichen Materialien ausgebildet sein.

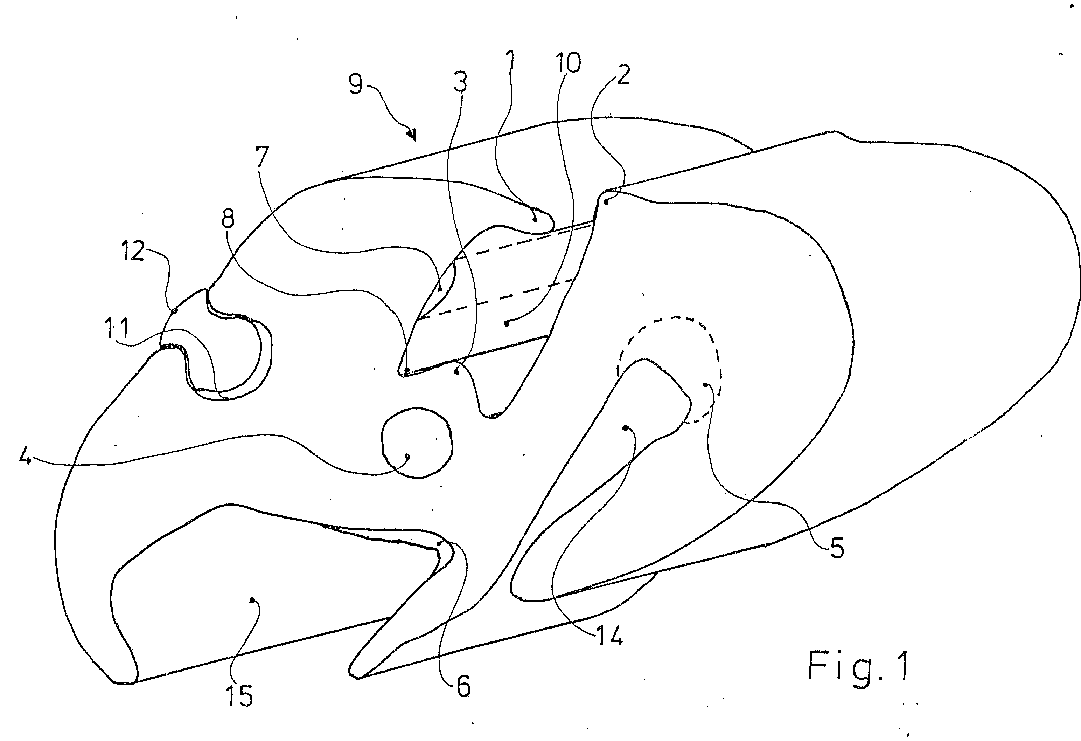

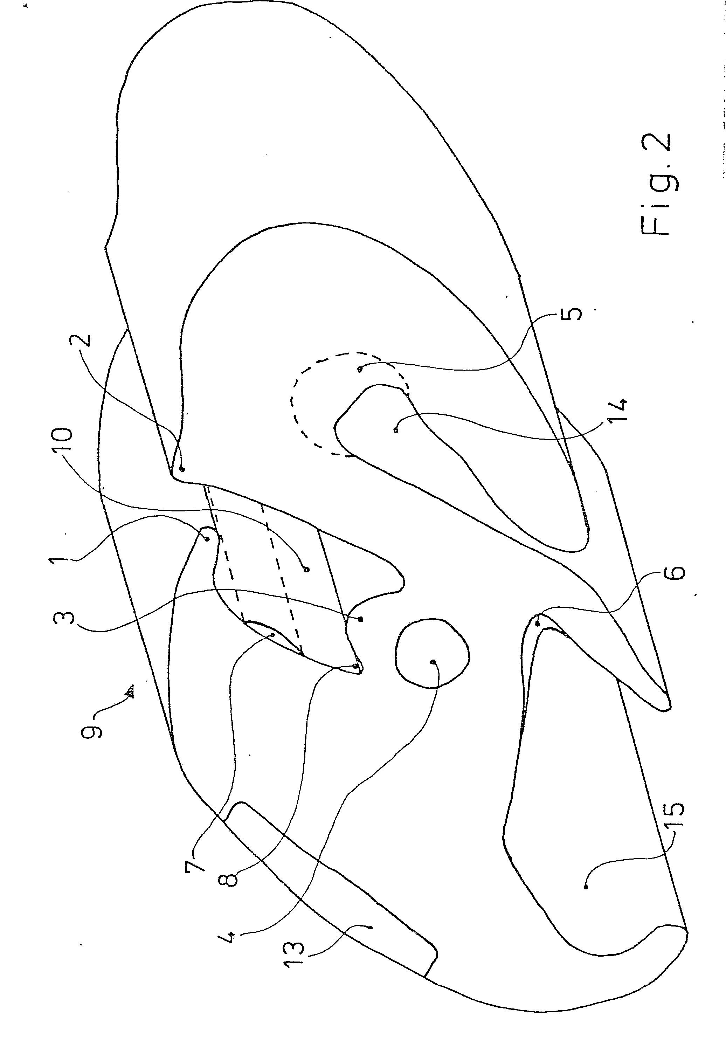

Die Erfindung wird nun anhand der beiliegenden Figuren 1 und 2 näher erläutert; es zeigen:

Figur 1    eine Profilleiste gemäß der Erfindung in perspektivischer Ansicht im Querschnitt;

Figur 2    eine erfindungsgemäße Profilleiste mit einer seitlichen Zone unterschiedlicher Elastizität.

In Figur 1 ist die Profilleiste 9 im Querschnitt dargestellt. Sie weist eine U-förmige Nut 10 zur Aufnahme einer Fensterscheibe auf. An der Mündung der Nut 10 ist an jeder Seite eine Dichtungslippe 1 und 2 angeordnet. Auf dem Nutboden 8 ist ein Federelement 3 angeordnet; es ist - wie abgebildet - einstückig mit dem Nutboden verbunden. Dieses Federelement ist als kompakter Wulst ausgebildet. Unterhalb des Federelements 3 befindet sich ein Hohlraum 4. Dieser Hohlraum ist den Anforderungen entsprechend ausgebildet und verläuft unterhalb des Feder-

- 6 -

elements 3 längs des Nutbodens 8 im Innern der Profilleiste 9. Zusätzliche Dichtleisten 5, 6 und 7 sind auf der Profilleiste 9 an den erforderlichen Abdichtungsstellen angebracht, nämlich am Boden der inneren Karosserienut 14, am Boden der äußeren Karosserienut 15 und an einer Wand der Nut 10. Die Dichtleiste 7 ist in Form eines Wulstes auf einer Seite der Nut 10 nahe der vorderen Dichtlippe 1 angeformt.

Befindet sich in der Nut 10 eine Fensterscheibe ,so drückt das Federelement 3 gegen den Querschnitt der Scheibenumrandung. Durch die Dimensionierung dieses Federelements 3 und die richtige Wahl der Elastizität dieses Federelements kann die Feder- und Dichtwirkung beeinflußt werden. Ferner geschieht dies auch durch eine mögliche Zusatzfederung, indem der Hohlraum 4 unterhalb des Federelements 3 mit Luft oder aber auch mit Materialien unterschiedlicher Elastizität ausgefüllt ist. Durch diese Anordnung entsteht außerdem zum Innenraum des Wagens eine Hintereinanderschaltung von mindestens drei Dichtelementen, nämlich der vorderen Dichtlippe 1, dem Federelement 3 als Querschnittsdichtung und der inneren Dichtlippe 2. Es entsteht dadurch von der Außenseite zur Innenseite des Wagens eine Labyrinthdichtung. Zusätzlich können zur Erhöhung der Labyrinthwirkung und damit zur weiteren Steigerung der Abdichtwirkung weitere Dicht-

- 7 -

und Federungselemente an geeigneten Stellen angebracht sein; dies ist in der Abbildung durch die Dichtleiste 7 nahe der Dichtlippe 1 und die Dichtleisten 5 und 6 am Boden der äußeren Karosserienut 15 und am Boden der inneren Karosserienut 14 zur Aufnahme des Karosseriebleches angedeutet.

Die Andrück-Kraft der Dichtlippen 1 und 2 ist desweiteren durch den Einbau eines Spreizelementes 12 in einer dafür vorgesehenen Spreiznut 11 erhöht worden; die Stärke des Spreizelementes 12 und der Spreiznut 11 können sowohl durch die Dimensionierung der Geometrie als auch durch das Maß ihrer Elastizität, das von weich bis starr variiert werden kann, reguliert werden. Auch die Andrück-Kraft weiterer Dichtelemente (z.B.1, 2, 5, 6, 7) läßt sich auf diese Weise einstellen.

In Figur 2 ist eine andere Art von Spreizvorrichtung in der erfindungsgemäßen Profilleiste 9 dargestellt. Sie besteht darin, daß anstelle der Spreiznut mit dem Spreizelement eine die Andrück-Kraft der Dichtlippen 1 und 2 regulierende Zone 13 aus einer härteren bzw.aus einer den technischen Anforderungen entsprechenden Qualität eines Elastomers oder Polymers eingerichtet ist, die sich von der übrigen Qualität des für die Profilleiste 9 verwendeten Materials unterscheidet. Die Zone 13 ist auf

0039933

der Seite der erfindungsgemäßen Profilleiste 9 einstückig eingearbeitet; sie befindet sich bevorzugterweise auf der Seite bei der äußeren Karosserienut 15.

Eine weitere Verbesserung kann noch dadurch erzielt werden, daß die Dichtlippen 1 und 2 aus einem Material unterschiedlicher Weichheit bestehen, dennoch aber an den Körper der Profilleiste 9 mit wiederum anderer Weichheit einstückig angeformt sind.

- 9 -

Z e i c h e n e r k l ä r u n g

1    vordere Dichtlippe

2    innere Dichtlippe

3    Federelement

4    Hohlraum

5    Dichtleiste

6    Dichtleiste

7    Dichtleiste

8    Nutboden

9    Profilleiste

10   Nut

11   Spreiznut

12   Spreizelement

13   Zone

14   innere Karosserienut

15   äußere Karosserienut

- 1 -

Ansprüche
----------

1. Scheibeneinfassung mittels einer Profilleiste aus Gummi oder Kunststoff, die zu einem Dichtungsrahmen zusammengefügt ist, welcher zur Halterung und Abdichtung von Fensterscheiben und ähnlichem, insbesondere bei Kraftfahrzeugen oder dergleichen, benutzbar ist, die im Querschnitt eine Nut zur Aufnahme der Fensterscheibe aufweist, wobei an der Mündung der Nut Dichtungslippen angeordnet sind,

dadurch gekennzeichnet,

daß auf dem Nutboden (8) ein Federelement (3) angeordnet ist.

2. Scheibeneinfassung nach Anspruch 1,

dadurch gekennzeichnet,

daß das Federelement (3) als kompakter Wulst ausgebildet ist.

3. Scheibeneinfassung nach Anspruch 1 oder 2,

dadurch gekennzeichnet,

daß sich in der Profilleiste (9) unterhalb des Federelements (3) mindestens ein Hohlraum (4) befindet.

4. Scheibeneinfassung nach Anspruch 3,

dadurch gekennzeichnet,

daß der Hohlraum (4) unterhalb des Federelementes (3) längs des Nutbodens (8) im Innern der Profilleiste (9) verläuft.

5. Scheibeneinfassung nach Anspruch 3 oder 4, dadurch gekennzeichnet, daß der Hohlraum (4) mit Luft oder mit Materialien unterschiedlicher Elastizität ausgefüllt ist.

6. Scheibeneinfassung nach Anspruch 5, dadurch gekennzeichnet, daß der Hohlraum (4) mit einem Polymer ausgefüllt ist.

7. Scheibeneinfassung nach Anspruch 5, dadurch gekennzeichnet, daß der Hohlraum (4) mit einem Elastomer ausgefüllt ist.

8. Scheibeneinfassung nach Anspruch 6 und / oder 7, dadurch gekennzeichnet, daß das Federelement (3) aus einem selbständigen Polymer oder Elastomer unterschiedlicher Elastizität besteht.

9. Scheibeneinfassung nach Anspruch 8, dadurch gekennzeichnet,

daß das Federelement (3) mit dem Füllmaterial des Hohlraums (4) einstückig verbunden ist.


10. Scheibeneinfassung nach mindestens einem der Ansprüche 1 bis 9,

dadurch gekennzeichnet,

daß zusätzliche Dichtleisten (5, 6, 7) aus Polymeren oder Elastomeren auf der Profilleiste (9) am Boden der inneren Karosserienut (14), am Boden der äußeren Karosserienut (15) und an einer Wand oder beiden Wänden der Nut (10) angeordnet sind.


11. Scheibeneinfassung nach Anspruch 10,

dadurch gekennzeichnet,

daß das Dichtelement (7) auf einer Seite der Nut (10)

nahe der vorderen Dichtlippe (1) angeformt ist.


12. Scheibeneinfassung nach mindestens einem der Ansprüche 1 bis 11,

dadurch gekennzeichnet,

daß eine die Andrück-Kraft der Dichtlippen (1, 2) sicherstellende Zone (13) aus entsprechendem Material entsprechender Elastizität in der Seite der Profilleiste (9), insbesondere auf deren Seite bei

- 4 -

der äußeren Karosserienut (15), angeordnet ist.

13. Scheibeneinfassung nach mindestens einem der Ansprüche 1 bis 11,

dadurch gekennzeichnet,

daß an der Seite der Profilleiste (9), insbesondere auf der Seite der äußeren Karosserienut (15),ein Spreizelement (12) in einer dafür vorgesehenen Spreiznut (11) zur Erhöhung der Andrückkraft der Dichtlippen (1, 2) angeordnet ist.

14. Scheibeneinfassung nach mindestens einem der Ansprüche 1 bis 13,

dadurch gekennzeichnet,

daß die Dichtflächen der vorderen Dichtlippe (1) und der inneren Dichtlippe (2) aus in ihrer Weichheit unterschiedlichen Materialien ausgebildet sind.

Fig. 1

1/2

0039933

0039933

Fig.2

Europäisches
Patentamt

EUROPÄISCHER RECHERCHENBERICHT

0039933

Nummer der Anmeldung

EP 81 10 3549.2

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| P,X | DE – U1 – 8 012 764 (HUTCHINSON GUMMI-WARENFABRIK GMBH) <br> * vollständiges Dokument * <br> –– | 1–14 |
| P,X <br> E,X | DE – A1 – 2 906 934 (METZELER KAUTSCHUK GMBH) <br> * vollständiges Dokument * <br> –– | 1–5,8 <br> 10,11 |
| X | DE – A – 2 228 869 (VOLKSWAGENWERK AG) <br> * Seite 5, Zeilen 13 bis 26, Fig. 1 * <br> –– | 1–5 |
| X | DE – A1 – 2 359 972 (H.U. REICHSTADT et al.) <br> * Anspruch 1; Fig. 3 * <br> –– | 1–7 |
| X | DE – U – 7 135 630 (WEILL & REINECKE GMBH) <br> * Seite 8, Absatz 2;  Fig. 1 * <br> –– | 1,8, <br> 10–12, <br> 14 |
| X | GB – A – 1 368 036 (STANDARD PRODUCTS CO.). <br> * Fig. 1 * <br> & DE – A – 2 219 866 <br> –– | 1,2,9 |
| X | US – A – 3 061 895 (H.F.KLEINHANS) <br> * Spalte 4, Zeilen 31 bis 56; Fig. 9 und 10 * <br> –– | 1–5 |

./..

### KLASSIFIKATION DER ANMELDUNG (Int. Cl.³)

E 06 B   3/62
E 06 B   7/22
B 60 R 13/06

### RECHERCHIERTE SACHGEBIETE (Int. Cl.³)

B 60 J   1/00
B 60 R 13/00
E 06 B   3/00
E 06 B   7/00

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 16-07-1981 | WUNDERLICH |

EPA form 1503.1  06.78

Europäisches
Patentamt

**EUROPÄISCHER RECHERCHENBERICHT**

| | EINSCHLÄGIGE DOKUMENTE | | KLASSIFIKATION DER ANMELDUNG (Int. Cl.³) · |
|---|---|---|---|
| Kategorie | Kennzeichnung des Dokuments mit Angabe, soweit erforderlich, der maßgeblichen Teile | betrifft Anspruch | |
| D | DE - A - 1 434 273 (PHOENIX GUMMIWERKE AG) | 1 | |
| A | DE - U - 7 616 021 (POLYPLASTIC B.V.) <br> * Anspruch 1; Fig. 1 * | 12,13 | |
| A | FR - E - 94 661 (ETS G. KLEIN ET CIE) <br> * Seite 3, Zeilen 8 bis 13, Fig. 2 * | 12,13 | RECHERCHIERTE SACHGEBIETE (Int. Cl.³) |

EPA Form 1503.2  06.78